Europäisches Patentamt

European Patent Office

Office européen des brevets

(11) Publication number: **0 371 681**
**A1**

## EUROPEAN PATENT APPLICATION

(21) Application number: 89312088.1

(51) Int. Cl.5: **A01F 29/00**

(22) Date of filing: 21.11.89

(30) Priority: 26.11.88 GB 8827754
06.12.88 GB 8828473

(43) Date of publication of application:
06.06.90 Bulletin 90/23

(84) Designated Contracting States:
AT BE CH DE ES FR GB GR IT LI LU NL SE

(71) Applicant: HARRY WEST (PREES) LIMITED
Lower Heath Prees
Whitchurch Shropshire, SY13 2BT(GB)

(72) Inventor: West, Harry
Cumberbatch House Lower Heath
Prees Whitchurch Shropshire(GB)

(74) Representative: Spruce, George Philip et al
Shaw, Bowker & Folkes Whitehall Chambers
23 Colmore Row
Birmingham B3 2BL(GB)

(54) Bale shredder.

(57) Bale shredder, e.g. for agricultural use in handling large round or square bales of fodder or straw, has a rotating receiver drum (16) carrying a bale or bales for rotation with an end face in abutment with a support floor (12). One or more (e.g. two) rotatably driven shredding formations (14) rotate on parallel axes to the drum axis and have upstanding blades (42) which project through outfeed apertures (32) in the floor to act on said face simultaneously to shred and loosen material therefrom progressively as the bale(s) rotate, the shredded material being discharged typically to either or both sides of the device, while elements (46) of the formation(s) coact with a supplementary aperture (60) in a central region of the floor to consume a central core of the rotating bale(s).

Fig. 3

## BALE SHREDDER

This invention relates to apparatus for shredding fibrous material which has been compressed into bales for storage and handling, particularly but not exclusively apparatus for agricultural for use in the form of a mobile machine for shredding and distributing baled animal bedding or fodder such as straw, hay or silage. The term "shredding" is used to mean the process of freeing the material from the bale to break the latter down into loosened material for subsequent processing or use whether or not the actual fibers of the material are chopped, cut, broken or shredded in the process.

The invention is particularly concerned with the shredding of the bulky cylindrical or square bales which are increasingly used for the harvesting and/or conservation of animal bedding or forage crops. Typical cylindrical bales of the large type are about 1.5 to 1.8m in diameter x 1.2 to 1.5 m in axial length and may weigh from about 500kg in the case of dry straw up to much heavier weights in the case of green fodder such as silage. Square bales of similar bulk and weight are also used. They are unwieldy needing powered devices for lifting and transport and their breaking down into loosened material as and when required e.g. for feeding or bedding animals can be a time consuming and inconvenient task.

Various bale shredding and straw or fodder chopping devices are known but many are slow acting, demand high power for operation, are of complex and costly construction, and/or not readily mobile.

Examples of devices for agricultural use in shredding large bales are described in GB-A-2122480 and in EP-A-0244977.

The object of the present invention is to provide a bale shredding device which is capable of handling large round or other bales in an efficient and safe manner and which is particularly economical in operation in that the whole of the bale is shredded speedily in a positive and reliable manner and without requiring excessive driving power so that it can be operated from the PTO of a standard agricultural tractor.

According to the invention there is provided a shredding device for baled fibrous material comprising a support structure including a platform defining an outfeed aperture; a bale receiver mounted for rotation relative to said structure about a first axis centred on said platform to locate and impart rotary motion to a baled bulk of the material placed in a bale receiving chamber defined by the platform and receiver so that a substantially planar face of the bulk abuts the platform; a shredding formation housed in or mounted on the structure and having at least one acting portion which projects through the outfeed aperture into the chamber, said shredding formation being operatively cyclically driven whereby the acting portion or portions thereof act progressively on said face of the bulk to separate material therefrom for passage through said aperture; and discharge means for impelling or conducting material so separated out of the chamber: characterised in that the shredding formation is rotatably driven about a second axis offset with respect to the first axis; the outfeed aperture is with offset respect to a central region of the platform; and the platform further defines a supplementary aperture in said region centred on the first axis or having said axis within its area, an element or elements on or of the shredding formation acting on a portion of the bulk at the centre of the chamber which enters said supplementary aperture in use.

An example of the invention is now more particularly described with reference to the accompanying drawings in which:-

Figure 1 is a diagrammatic vertical section (on line 1-1 of Figure 2) of the mechanism of a shredding device for handling large bales;

Figure 2 is a plan view thereof, and

Figure 3 is a perspective view of part of said device.

The device includes support structure 10 which will include a main frame or chassis (not shown in the drawings for clarity). The example described will be provided with mountings (not shown) for attachment to and carriage on a standard tractor three point linkage. If the device is to handle the largest sizes of cylindrical bale (e.g. 1.8m diameter), it may take the form of a trailer vehicle or semi-trailer arrangement for attachment to a tractor in use. In either case this example of the device is designed to be powered from the tractor PTO in use.

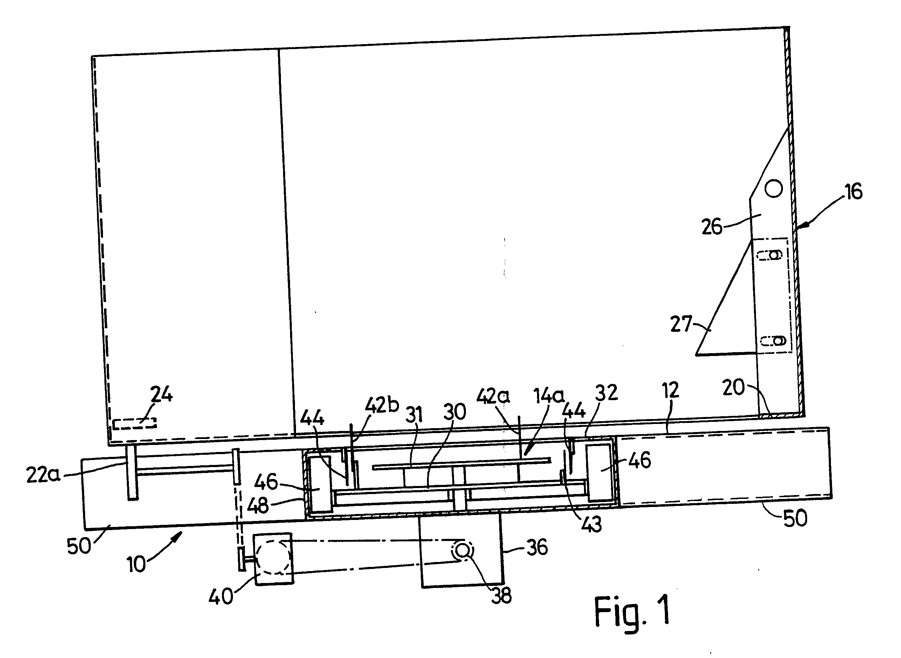

As best seen in Figure 1 the support structure 10 includes a horizontal floor constituting a platform 12 forming the upper face of said structure and housing, in this example, two rotatably driven shredding formations 14a,14b described in further detail below.

A bale receiver in the form of an open ended cylindrical drum 16 is mounted and located for rotation about a first vertical axis centered above platform 12.

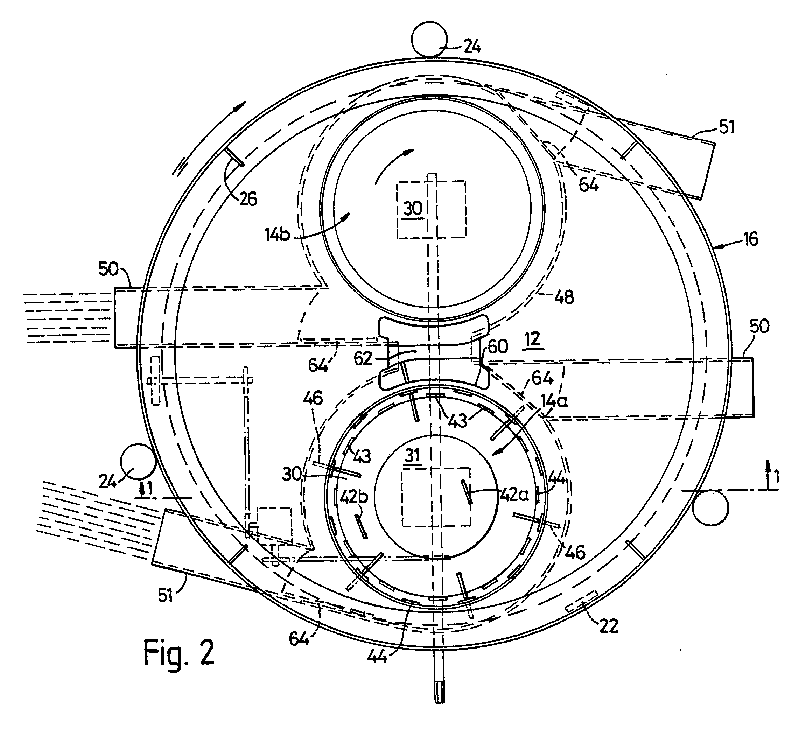

A radially inwardly directed flange 20 at the bottom edge of drum 16 rides on angularly spaced rollers 22 journalled on horizontal axes on structure 10, one of said rollers 22a being power driven to cause operative rotation of the drum 16 clockwise as viewed in Figure 2 and there are also angularly spaced locating rollers 24 on said structure bearing on the drum periphery to keep it centered.

The drum also has angularly spaced vertical ribs 26 on its inner wall for more positive engagement with a bale or bales placed therein as described hereafter to impart rotation thereto. Ribs 26 may be provided with adjustably mounted wedge shaped plates 27 which can be set to grip the bale periphery while allowing it to drop within the drum.

Each shredding formation 14a, b, includes a horizontal main rotor disc 30 housed within structure 10 below the level of platform 12 co-axial with a respective circular outfeed aperture 32 in said platform whose diameter is somewhat less than the overall diameter of the associated disc.

Discs 30 and apertures 32 are centered on respective second axes which are, in this example, spaced equidistantly from the first axis on a common diameter of the envelope of rotation of drum 16. The diameter of apertures 32 is, in this example, some four-tenths of the diameter of drum 16 thus each aperture occupies a major portion of the drum radius on opposite sides of its centre.

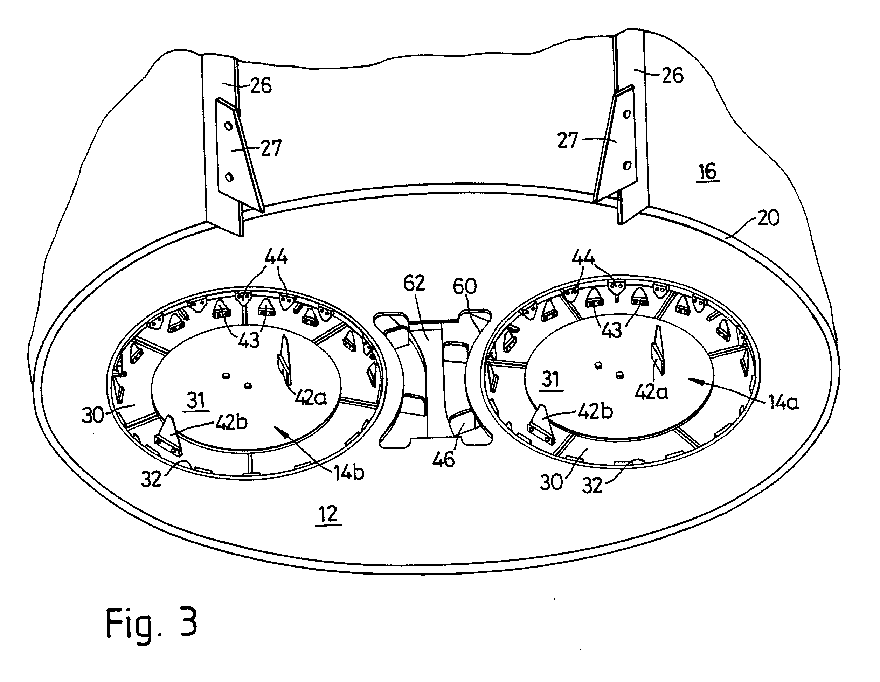

Each shredding formation 14 is operatively driven through a respective gearbox 36 from a longitudinal drive shaft 38 connected in use to the tractor PTO. A subsidiary drive is also taken from shaft 38 by way of a further gearbox 40 to transmit drive to roller 22a. Both of the shredding formations 14 and the drum 16 are driven for rotation clockwise as viewed in Figures 2 and 3.

Each main rotor disc 30 carries a subsiding rotor disc 31 centred thereon. The diameter of discs 31 is less than that of aperture 32 and they are mounted at an intermediate level with respect to platform 12 and the level of main discs 30. Each formation carries blades 42 having acting portions which project above the level of platform 12 within the area of the associated aperture 32. In this example each formation 14 has two blades 42, one 42a mounted on subsidiary disc 31 at about half the radius of the associated aperture 32, the other 42b being mounted on main disc 30 between the edge of disc 31 and the edge of the aperture. However, the use of other numbers and arrangements of blades 42 is contemplated.

Fixed downwardly directed blades 44 are attached to platform 12 around the edges of the apertures 32 which coact with further blades 43 carried on discs 30 to provide a chopping action. In this arrangement the series of moving blades 43 are spaced around the margin of disc 30 just within the radius of the associated aperture 32 but not projecting above the level of platform 12. In some applications one or more of these blades could project above that level to act in the same way as blades 42.

The periphery of each disc 30 carries a number, in this example six, angularly spaced centrifugal fan blades 46 which sweep around a respective cylindrical shroud 48 below platform 12, each shroud having a pair of tangential rectangular section exhaust ducts 50,51. Ducts 50,51 extend laterally of structure 10 to open to the opposite sides of the path of travel of the device in use.

A supplementary aperture 60 is also provided in the platform 12 centered on the axis of rotation of the drum 16 or having said axis within its area i.e. immediately between the apertures 32 and preferably of the greatest dimensions possible to fit between said apertures while maintaining adequate strength in that bridging region of the platform 12. While a circular or rectangular aperture might be used, an elongated curvilinear aperture such as the shape shown in the drawing is preferred.

Opposite side portions of aperture 60 open into peripheral zones of the two shrouds 48 and tip portions of the fan blades 46 of both formations 14 in this example sweep immediately below said portions of aperture 60 as the rotor discs 30 rotate.

With this arrangement, in operation as described below, instead of the part of the lower face of the baled bulk centered on the drum axis being held up by the bridging region of platform 12 between the two apertures 32, the supplementary aperture 60 allows this central part to drop down so that it is shredded by the action of said tip portions of fan blades 46, supplementing the main shredding action of the upstanding blades 42. This ensures that substantially the whole underface of the bale or bales within and rotated by the drum 16 is acted on simultaneously, thus the bale or bales are not held up by platform 12 to such an extent that the shredding action is reduced or is blocked and the consumption of the whole of the bale or bales is carried out in a particularly positive, regular and speedy manner. This effect is particularly valuable in ensuring effective and regular shredding of the whole of the very largest sizes of bale which are a close fit in drum 16 so that they cannot be displaced off centre therein to ensure that all their end face is acted on by the main shredding formations 14.

While the fan blades 46 act as elements for shredding material from the bale(s) in conjunction with aperture 60 in the above arrangement it will be appreciated that other forms of element of or carried on or forming part of one or both formations 14 could be provided e.g. one or more additional moving blades or the like, acting in the region below aperture 60.

To prevent excessive loading on blades 46 or other elements acting below aperture 60 and limit the rate at which they act on the bale or bales a small supporting table 62 is provided in the area of and below aperture 60 at a height above the level of discs 30 but spaced below the level of platform 12. This table limits the protrusion of the bale(s) or bale material through aperture 60. Provision may be made for adjustment of the effective height of table 62 to regulate the shredding action in this area.

Typically in operation a large cylindrical bale e.g. of straw for bedding animals is dropped endwise into drum 16. When the mechanism is set in motion the rotation of drum 16 imparts rotation to the bale as its periphery is engaged by the ribs 26 (even if the bale is under-size it will move off centre of the drum sufficiently for said engagement to take place) and, as it rotates, respective areas of its bottom end face are progressively acted on simultaneously by the acting portions of blades 42 of the two shredding formations 14. The straw or other material so progressively freed from the bale passes through the two apertures 32 onto the discs 30 where it is impelled both centrifugally and by the fan induced air flow radially outwardly of the respective discs into the outer zone of the respective shroud 48, at the same time being chopped or otherwise further shredded by the coaction of the moving and fixed blades 42, 44. The material is swept round the associated shroud 48 to be blown and projected through the selected exhaust ducts and thus distributed to either or both sides of the machine.

At the same time the central region of the bale(s) is acted on at aperture 60 as described above.

As material continues to be removed from its bottom the baled bulk drops down until it has been completely consumed and distributed.

The projection of plates 27 on drum ribs 26 can be adjusted to adapt the device for most effective operation with bales of different dimensions. Large square bales may be handled likewise by being inserted end on into the drum 16, or possibly two or more smaller bales may be loaded therein to be acted on simultaneously and/or in succession.

The shredding formations 14 are small enough in diameter to have a rapid action without requiring excessive drive power yet the provision of the double shredding formations ensures that a maximum total area of the face of the bale (or bales) is acted on at one time, thus the shredding is effected in a particularly speedy and efficient manner. Moreover most of the weight of the loaded baled bulk is carried by the platform 12 so that there is not excessive axial loading on the shredding formations and the amount of material they remove at any one time is substantially limited by the size selected for apertures 32 and 60 and the number and extent of projection of the acting portions of the moving blades above the platform level (which projection might possibly be adjustable) so that there is much less likelihood of jamming or overloading of the drive.

To selectively regulate the quantity or proportion of material delivered from each side of the device and/or the direction of delivery relative to the direction of forward travel, ducts 50,51 include manually operable gates 64. Angularly adjustable discharge nozzle portions might also be provided on some or all said ducts. For some applications it may be desirable that all the discharge from both shredding formations 14 can be directed to one side or the other and for this purpose the two tangential ducts 50,51 connect with the respective shroud 48 on substantially diametrically opposite sides thereof and are directed to opposite sides of the device. The two ducts on each side of the device are, in this example, angled towards each other so that the delivery exiting therefrom merges or is directed together on the respective side. The shut-off gates 64 in the ducts are used for full delivery to the chosen side or apportioning the delivery equally or possibly unequally between the sides, as well as temporarily shutting off deliver eg when the device passes a water trough or a passage between animal pens.

For some applications more than two shredding formations might be provided e.g. three or four smaller diameter formations disposed symmetrically or asymmetrically with respect to the drum or receiver axis. Said formations need not necessarily have matching diameters or other dimensions. Use of a single shredding formation is also contemplated by the invention, and the or each said formation may include only a single acting portion, eg blade 42, projecting into the chamber.

## Claims

1. A shredding device for baled fibrous material comprising a support structure (10) including a platform (12) defining an outfeed aperture (32); a bale receiver (16) mounted for rotation relative to said structure about a first axis centred on said platform to locate and impart rotary motion to a baled bulk of the material placed in a bale receiving chamber defined by the platform and receiver so that a substantially planar face of the bulk abuts the platform; a shredding formation (14) housed in or mounted on the structure and having at least one acting portion (42) which projects through the outfeed aperture into the chamber, said shredding formation being operatively cyclically driven whereby the acting portion or portions thereof act progressively on said face of the bulk to separate material therefrom for passage through said aperture; and discharge means (46,48,50) for impelling or conducting material so separated out of the chamber: characterised in that the shredding formation is rotatably driven about a second axis offset with respect to the first axis; the outfeed aperture is offset with respect to a central region of the platform; and the platform further defines a supplementary aperture (60) in said region centred on the first axis or having said axis within its area, an element or elements (46) on or of the shredding formation acting on a portion of the material in said region of the chamber which enters said supplementary aperture in use.

2. A device as in Claim 1 characterised in that a supporting table (62) is provided in the area of the supplementary aperture (60) spaced below the floor or platform (12) to limit the protrusion of the material through said aperture.

3. A device as in Claim 1 or 2 characterised in that said elements are fan blades (46) carried on each shredding formation below the floor or platform (12) which blades also act as part of the discharge means.

4. A device as in any preceding claim characterised in that the platform (12) defines at least two said outfeed apertures (32) each offset with respect to said central region, and each having a respective said shredding formation (14a,b) associated therewith and rotatably driven about respective second axes offset from each other and from the first axis.

5. A device as in Claim 4 characterised in that each said aperture (32) is circular and concentric with the respective shredding formation second axis.

6. A device as in Claim 4 or 5 characterised in that the two shredding formations (14) and associated outfeed apertures (32) are disposed symmetrically on a common diameter of the envelope of rotation of the receiver about the first axis.

7. A device as in Claim 6 characterised in that the diameter of each aperture (32) is substantially four-tenths of the diameter of said envelope of rotation.

8. A device as in Claim 4,5,6 or 7 characterised in that each shredding formation (14a,b) is provided with respective associated discharge means (46,48,50) whereby said separated material can be discharged from the chamber in two streams simultaneously.

9. A device as in Claim 8 characterised in that said discharge means are disposed or selectively operable to direct said streams to opposite sides of the device.

10. A device as in any preceding claim characterised in that the receiver (16) and the or each shredding formation (14) are all driven in the same direction of rotation.

11. A device as in any preceding claim characterised in that the receiver (16) includes radially inwardly directed projections (26) for more positive engagement of the baled bulk to impart said rotary motion thereto.

12. A device as in any preceding claim characterised in that said platform (12) is substantially horizontal in use and said axes of the or each shredding formation (14) and the receiver (16) are substantially vertical in use.

Fig. 1

EP 0 371 681 A1

Fig. 2

Fig. 3

EP 0 371 681 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 535 437 (VÖLK-MASCHINENBAU)<br>* The whole document * | 1,3,11,12 | A 01 F 29/00 |
| A,D | EP-A-0 244 977 (KIDD FARM MACHINERY LTD)<br>* The whole document * | 1,7,10,11,12 | |
| A | DE-A-3 235 781 (E. WEICHEL)<br>* Figure 2, pages 21-22 * | 1,3,4 | |
| A,D | GB-A-2 122 480 (C.E. WALLEY)<br>* Page 1, lines 89-93 * | 8,9 | |

TECHNICAL FIELDS
SEARCHED (Int. Cl.5)

A 01 F

The present search report has been drawn up for all claims

| Place of search | Date of completion of the search | Examiner |
|---|---|---|
| THE HAGUE | 08-02-1990 | CROWE D. |